# EUROPEAN PATENT SPECIFICATION

(11) **EP 2 310 313 B1**
(45) Date of publication and mention of the grant of the patent: **25.06.2014**
(21) Application number: 09786826.9
(22) Date of filing: 06.08.2009
(51) Int. Cl.: C01B 3/38, C01B 3/40, B01J 8/02, B01J 23/46, B01J 37/02, B01J 19/24, B01J 23/00, B01J 35/04

(54) **AUTOTHERMIC CATALYTIC REACTOR WITH FLAT TEMPERATURE PROFILE**
AUTOTHERMER KATALYTISCHER REAKTOR MIT KONSTANTEM TEMPERATURPROFIL
RÉACTEUR CATALYTIQUE AUTOTHERMIQUE AVEC UN PROFIL DE TEMPÉRATURE PLAT POUR LA PRODUCTION D'HYDROGÈNE À PARTIR D'HYDROCARBURES LÉGERS

(30) Priority: 08.08.2008 IT SA20080023
(43) Date of publication of application: 20.04.2011
(73) Proprietor: Universita' Degli Studi di Salerno, 84084 Fisciano (SA) (IT)
(72) Inventor: PALMA, Vincenzo, I-84084 Fisciano - SA (IT); CIAMBELLI, Paolo, I-84084 Fisciano - SA (IT); PALO, Emma, I-84084 Fisciano - SA (IT); VILLA, Pierluigi, I-67040 Monteluco di Roio - AQ (IT)
(74) Representative: Romano, Giuseppe
(86) International application number: PCT/IB2009/053430
(87) International publication number: WO 2010/016027

(56) References cited:
- WO-A-99/25649
- WO-A-03/008095
- VIPARELLI P ET AL: "Catalyst based on BaZrO3 with different elements incorporated in the structure" APPLIED CATALYSIS A: GENERAL, ELSEVIER SCIENCE, AMSTERDAM, NL, vol. 280, no. 2, 8 March 2005 (2005-03-08) , pages 225-232, XP025332575 ISSN: 0926-860X [retrieved on 2005-03-08]
- LI JCH: "Radial-Flow Packed-Bed Reactors" ULLMANN'S ENCYCLOPEDIA OF INDUSTRIAL CHEMISTRY, 15 July 2007 (2007-07-15), pages 1-14, XP002555243 online

## Description

### Technical field of the invention

The present invention relates to an autothermic catalytic reactor characterised by a flat temperature profile with a high conversion efficiency, for hydrogen production from light gaseous or liquid hydrocarbons, air and water as reactants. Thanks to the concurrent use of specific high thermal conductivity and high porosity structured catalysts, and to a radial flow geometry, the reactor allows achieving high hydrocarbon conversion efficiency even at high spatial velocity values. Moreover, the special formulation of the catalyst, in as synergy with the porosimetric-textural structure thereof and with the radial flow geometry, allows both very short start-up time and a considerable stability upon changing of the operating conditions. These features make it especially suitable as an essential element in the make of small systems for the distributed production of hydrogen.

### Abstract

The present invention relates to the make of a heterogeneous gas-solid catalytic reactor operated in autothermic conditions, but characterised by a flat temperature profile, to be used in the distributed production of hydrogen, obtained by catalytic conversion of light hydrocarbons, air and water.

The autothermic reactor (ATR) as a whole consists of a central zone where the structured catalyst is positioned, of a zone where the reactants, pre-heated beforehand by the effluent gases of the reactor, meet up and mix, and of two heat exchangers for recovering the sensitive heat of output gases by the cold reactants. This system configuration allows feeding the reactor directly with cold reactants at room ambient temperature, in particular with water in liquid phase, which is vaporised and heated directly by the sensitive heat of the reaction products. The operating conditions of the reactor in terms of temperature are clearly fixed by the choice of the feeding ratios O₂/C(x), H₂O/C(y) and by spatial velocity (GHSV). Typical values of feeding ratios fall within the ranges 0.3-1 and 0.5-2, respectively for x and y, whereas spatial velocity is comprised between 10000 and 200000 h⁻¹, corresponding to contact times variable within the range 20-400 thousandths second. Generally, in typical ATR reactors used industrially, temperature profiles in the catalytic bed are characterised by large gradients between the inlet and the outlet section (usually even higher than 200°C). The forming of such gradients is due to at least three factors that operate in a concurrent manner. In fact, the first factor is related to the intrinsic mechanism by which the autothermic reforming reaction takes place on the catalyst surface, a second one to the typical features of bad heat conductors of the catalyst supports normally used, and the third one to the fluid-dynamic conditions that set in the catalytic bed, typically consisting of packed particles. This invention simultaneously uses three actions aimed at limiting the negative effects of the three factors listed above, in order to obtain the temperature profile flattening so as to optimise the operation of the ATR reactor both in terms of energy and of catalytic activity.

In particular, the proposal relates to the following three actions:
1. the adoption of a specifically formulated catalyst so as to favour a "direct type" reaction mechanism, as opposed to commonly used catalysts that operate through an indirect mechanism
2. the use of the catalyst on a structured support of fecralloy or silicon carbide with a high porosity and tortuosity, and characterised by a high thermal conductivity coated with noble elements inserted in a chemical structure of the perovskite type with formula BaZr₁₋ₓ(noble Metal) ₓO₃.
3. the adoption of a radial rather than axial flow geometry catalytic bed, so as to locally optimize the contact time in the catalytic bed.

### Background art of the invention

The main processes that may be used for hydrogen production are: steam reforming (SR), partial oxidation (POX) and autothermic reforming (ATR).

While they are widely used in the industrial practice, these processes may be unsuitable if the applications are on a small scale and aimed at a distributed and decentralised production of hydrogen. In this case, in fact, it would be advisable to use small-sized reactors with a low number of auxiliary pieces of equipment. Therefore, for these applications it is necessary to find innovative processes that use the progresses made both in the catalysis and in the engineering field [1, 2].

Among the technologies mentioned, the one that seems most suitable for a distributed production of hydrogen is autothermic reforming since the adiabatic nature of the process allows working with a constructively simpler reactor, more small-sized and characterised by low load losses. In fact, compared to the steam reforming process, the autothermic reforming reduces the problems related to heat transfer while assuring, in any case, that high hydrogen yields and negligible formation of carbon deposit are achieved.

At an industrial level, autothermic reforming was developed by Haldor Topsøe at the end of the Fifties to increase the hydrogen yield in ammonia production systems [3]. In this process, the fuel fed reacts with a mixture of oxygen and steam through the use of a burner and a fixed bed catalyst that allows achieving the thermo-dynamic balance and the removal of the carbon deposit.

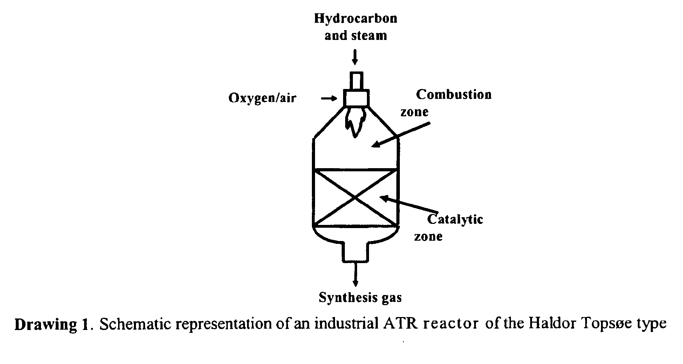

A schematic representation of a typical ATR reactor is shown in Drawing 1.

In a typical ATR reactor of the Haldor Topsøe type there are two reaction zones, a first combustion zone and a second catalytic one. The supply is sent inside the burner and carefully mixed with steam and an amount of oxygen or air substoichiometric compared to that of total combustion. In the combustion zone, a share of the fuel reacts, due to the very high temperatures, essentially according to reaction (1):

CH₄ + 3/2 O₂ = CO + 2H₂O ΔH⁰_{298K}= -519 kJ mol⁻¹ (1)

Through proper control of the supply ratios O₂/C and H₂O/C, the exothermicity of the reaction (1) provides the necessary heat for supporting the endothermic reaction of steam reforming (2) which, along with the water gas shift (3) reaction, takes place in the catalytic zone:

CH₄ + H₂O = CO + 3H₂ ΔH⁰_{298K}= +206 kJ mol⁻¹ (2)

CO + H₂O = CO₂ + H₂ ΔH⁰_{298K}= -41 kJ mol⁻¹ (3)

The main elements of an ATR reactor consist of the burner and the catalyst. The burner allows proper mixing of the currents fed which is essential to prevent the forming of carbon deposit. The catalyst allows achieving the thermodynamic balance further favouring the gasification of any carbon compounds produced. The size and shape of catalyst particles must be optimised to obtain a high activity, low load losses and thus a compact reactor [4].

The autothermic process is conducted with the addition of steam to the supply current for further limiting the forming of carbon deposit.

In more recent autothermic reforming reactors, the combustion zone has been almost completely eliminated and therefore all the hydrocarbon conversion takes place in the catalytic zone. This change was enabled by the coming of new catalyst formulations, and of structured catalysts in the shape of beehive monoliths. In fact, in new ATR reactor there is a higher overall efficiency because the heat required for the progress of reforming endothermic reactions is directly generated inside the catalytic bed, thus reducing the "hot spots" and achieving a lower mean operating temperature of the reactor that leads to an improved overall efficiency of the reactor.

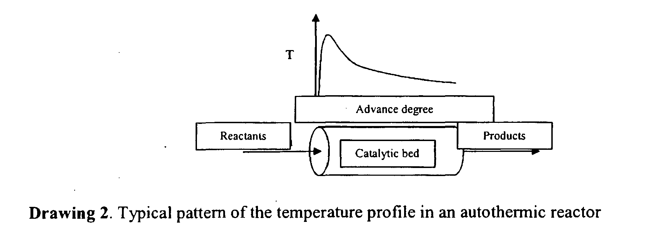

In the practice in can be said that the entire ATR process is conducted in the presence of a catalyst that controls the course of the reaction and therefore determines the selectivity of the oxidation and steam reforming reactions. The latter absorbs a share of the heat generated by the hydrocarbon oxidation, limiting the excess rise of temperature in the reactor. As a whole, the process is slightly exothermic. The temperature profile that sets inside a modern ATR reactor is characterised by a sudden rise in the inlet zone by the effect of the oxidation reaction followed by a drop of temperature by the effect of the reforming endothermic reactions [5,6]. The typical temperature profile of an autothermic reactor is shown in Drawing 2.

The possibility of operating at lower operating temperatures is an advantage from both the chemical and the engineering point of view. From a chemical point of view, in fact, the water gas shift reaction is favoured with an increase of hydrogen and CO₂ selectivity. From an engineering point of view, a lower operating temperature requires lower thermal integration (heat exchange between cold reactants and hot exhaust current), lower fuel consumption during the start-up step, less insulation that translates into a reduction of size and costs, greater choice of materials and thus, a reduction of system costs [7].

Finally, it should be kept in mind that an essential requirement of a compact "fuel processor" consists of a quick ignition and fast response to load variations. For the ATR reactor to be capable of self-supporting, a mechanism for triggering the combustion reaction of the fuel-air mixture must be provided, and this must take place only during the ignition step, so as to allow heating the reactor to the autothermic reforming catalyst threshold temperature, thus ensuring that the reaction proceeds on the catalyst surface, without the need for further energy contributions from the outside. Among the systems mentioned in the literature for triggering the reaction between fuel and air are electrical resistors [8] and catalysts shaped as electrically heated monoliths (EHC) [9].

WO99/25649 discloses an autothermal catalytic hydrogen generator which can be used directly from the generator without further removal of carbon monoxide and other impurities.

### Objects of the invention

The main object of the present invention is to develop an autothermic catalytic reactor characterised by a flat temperature profile for hydrogen production through autothermic reforming reaction of light hydrocarbons with air and water.

In particular an autothermal catalytic reactor with flat temperature profile for hydrogen production from gaseous or liquid hydrocarbons, reacting with air and water, comprising:
- a catalytic bed realized with a radial flow geometry;
- a structured support of Iron/Chromium alloy or Silicon Carbide foam, having an open cell cellular structure and a porosity comprised within the range 6-200 ppi and a vacuum degree comprised within the range 10-99%, so to obtain a high tortuosity, characterised by a high thermal conductivity, wherein said support is coated with a chemical structure of the perovskite type with formula BaZr1-x(noble Metal)xO3 as catalyst, said chemical structure being capable of activating a "direct type" reaction mechanism.

The system consists of a fixed bed catalytic reactor, thermally integrated for recovering sensitive heat from reaction products, capable of self-supporting, carrying out the reactant conversion without any external heat source. Another object of the present invention is to prove that a catalyst formulation capable of favouring a "direct" type mechanism supports the onset of optimum conditions for obtaining a flat temperature profile.

Another object of the present invention is to prove that making the catalyst on a structured support with a high porosity, tortuosity and thermal conductivity, maximising the transfer of matter and energy allows obtaining lower operating temperatures and higher hydrogen yields, the operating conditions being equal. Another object of the present invention is to prove that a radial flow geometry of the gases through the catalytic bed, contributing to optimise the local contact time,allows a further improvement of the temperature profile, with consequent decrease of the thermal gradient along the catalytic bed and a better use of the catalyst volume, ensuring a higher hydrocarbon conversion and greater overall efficiency, the operating conditions being equal.

### Summary of the invention

The present invention relates to the make of a gas-solid fixed bed catalytic reactor capable of ensuring the conversion of light hydrocarbons, liquid and gaseous, into mixtures enriched with hydrogen by an oxidative reforming reaction of the hydrocarbon with air and water, conducted in autothermic conditions and characterised by a flat temperature profile, simultaneously using a specific chemical formulation of the catalyst, a high porosity, tortuosity and thermal conductivity structured support, and designed so as to induce a crossing geometry of the catalytic bed by the reactant flow of the radial type. Such features, in addition to the thermal integration for recovering sensitive heat of the products by the reactants, ensure, even in high spatial velocity conditions, the achievement of temperature conditions and compositions of the outgoing gas very similar to those envisaged by the thermodynamic balance, ensuring higher hydrogen productivity by catalyst volume unit and a higher overall energy efficiency, intended as moles of hydrogen produced by mole of hydrocarbon fed, even without any additional heating source for the reactants.

The invention therefore exalts the superiority of the overall performance of such reactor related to the synergic effect obtained by associating different operations, highlighting the advantage due to the use of a specific catalytic reactor wherein a specifically formulated, developed and prepared catalyst is used, on a support that improves the exchange features of matter and energy and designed to allow a radial flow of the gases reacting through the catalytic bed.

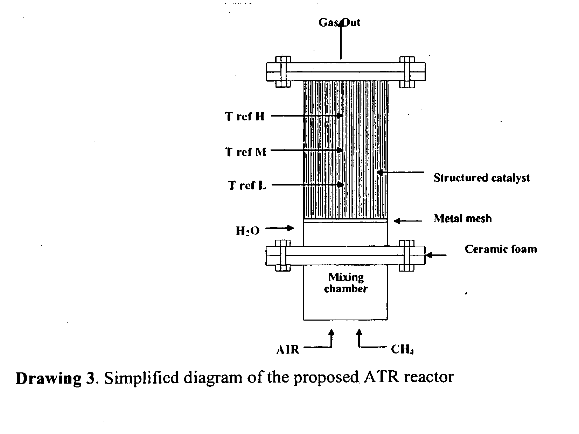

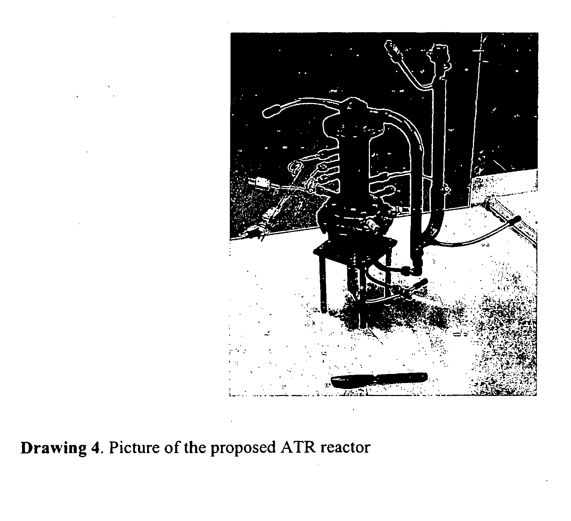

The reactor, a simplified diagram whereof is shown in Drawing 3, in the catalytic zone has a cross section with circular geometry with an inside diameter of 36mm. The height of the catalytic zone is about 75mm, thus constituting a total volume of about 76cm³, where the catalyst of the autothermic reforming reaction can be seated. A picture of the ATR reactor as a whole is shown in Drawing 4. In the reaction zone, the reactor is made of AISI 310 steel with a wall thickness equal to 3mm. A mesh made by interlacing a 1mm thick wire of a special alloy (Kantal), anchored on three supports located at 120° from one another inside the reactor, is the base for positioning the catalyst, and also serves as further distribution system for the reactant gas flow.

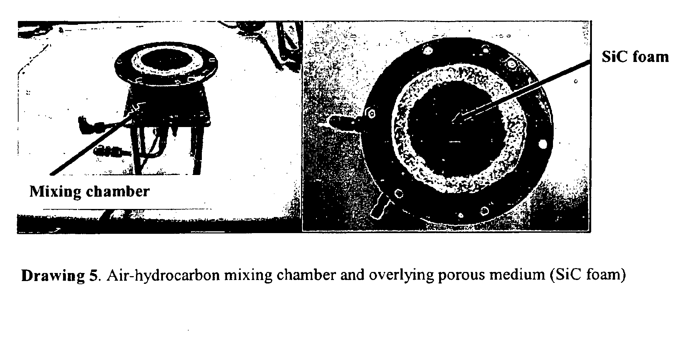

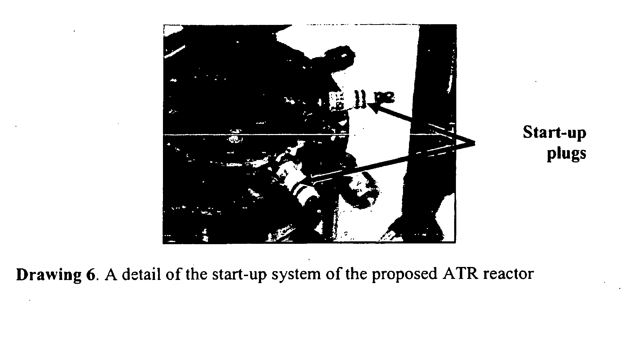

The reactor is further provided with a reactant mixing zone and an autonomous start-up system for quickly reaching the catalyst threshold temperature. In fact, at the basis of the catalytic zone, and immediately after the volume where air and hydrocarbon meet up, there is a porous medium with a very high vacuum and tortuosity degree and at the upper end thereof there are located two spark plugs the position whereof is such that upon the spark there occurs the forming of a small voltaic arc so as to obtain the best contact with the air and hydrocarbon mixture, thus ensuring an immediate and steadier trigger. Drawings 5 and 6 respectively show pictures of the air-hydrocarbon mixing zone, the porous silicon carbide medium and the two spark plugs for generating the voltaic arc.

An object of the present invention is to carry out the transformation of mixtures of air, water and hydrocarbons into gaseous currents enriched with hydrogen, using low contact times and ensuring very high hydrocarbon conversions, with high energy efficiency. For such reaction it is necessary to obtain a suitable temperature profile inside the catalytic bed, which should be capable of favouring the slower and more endothermic reforming reactions without affecting the total and partial oxidation reactions that are essential for the thermal stability of the reactor. The control of such temperature profile may be obtained, even if in a partial manner, operating with different strategies. In fact, a control on a microscopic scale may be carried out, determining a specific chemical formulation of the catalyst, which should be capable of "synchronising" the oxidation reactions with reforming ones, moreover it is possible to use structured supports with a high thermal conductivity so as to attenuate the axial and radial temperature and concentration gradients in the catalytic bed, and finally obtaining a specific geometry of flow crossing of the bed. To date, reactors that combine these three different operations for making an adiabatic Autothermic Reforming reactor with a "quasi-isothermal" temperature profile are not known in the literature.

### Brief description of the annexed drawings

Drawing 1 shows a schematic representation of a typical industrial ATR reactor.
Drawing 2 shows a typical pattern of the temperature profile in an autothermic reactor.
Drawing 3 shows a simplified diagram of the proposed ATR reactor.
Drawing 4 shows a picture of the proposed ATR reactor.
Drawing 5 shows two pictures of the feeding zone of the ATR reactor. The detail refers to the air-hydrocarbon mixing chamber and the overlying porous medium (SiC foam).
Drawing 6 shows a picture of the proposed ATR reactor where the system for igniting the air-hydrocarbon mixture is shown.

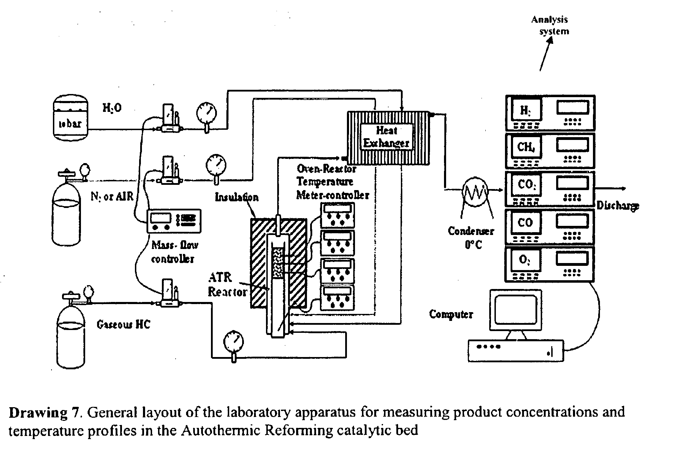

Drawing 7 shows the general layout of the laboratory apparatus for measuring product concentrations and temperature profile in the Autothermic Reforming catalytic bed.

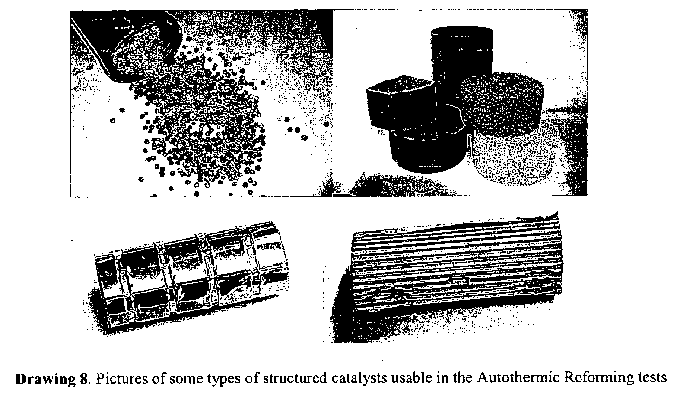

Drawing 8 shows the pictures of some types of structured catalysts usable in the Autothermic Reforming tests.
Drawing 9 shows the diagram of the process for recovering sensitive heat of the products by the reactants.
Drawing 10 shows the diagram of gas crossing and positioning of the thermocouples for monitoring the temperature profile in the two configurations, axial (A) and radial (R) of the catalytic bed.
Drawing 11 shows the pictures of a ceramic foam ring after the deposition of catalyst ATR7B (a), and the catalytic bed made by assembling the foam rings (b).
Drawings 12-14 show respective diagrams.

### Detailed description of the invention

The main object of the invention is to develop a catalytic reactor for carrying out the Autothermic Reforming reaction of hydrocarbons with air and water, operating in totally adiabatic conditions, but capable of ensuring a temperature profile along the catalytic bed characterised by a very low temperature gradient along the crossing direction of the bed (dT/dx), thus obtaining an "autothermic reactor with isothermal profile" so as to allow the onset of optimum operating conditions, ensuring a significant improvement in terms of overall energy yield, specific hydrogen productivity and life of the catalyst.

The ATR reactor consists of two main sections, a lower section where hydrocarbon and air meet up with a predetermined molar ratio O₂/C (with a value ranging, during the start-up step, within the range 2.2-0.8, more preferably within the range 1.6-1 and more preferably 1.36) and an upper zone where the catalyst is positioned and, as a consequence, the autothermic reforming reactions take place, bringing about the conversion of reactants in the products. For this reason, this zone is defined as Reforming zone.

A disc of ceramic material is arranged between the two zones, containing silicon carbide (SiC), with an open cell cellular structure, and a porosity comprised within the range 6-200 ppi, more preferably within the range 40-150 ppi and more preferably 65 ppi, with a vacuum degree comprised within the range 10-99%, more preferably within the range 50-99% and more preferably 90%. The presence of such structure generates a zone with a high tortuosity that allows a more efficient and intimate mixing of the reactants.

Immediately above the SiC foam there are arranged two spark plugs positioned so that a small voltaic arc is generated upon ignition. The presence of the voltaic arc is required to trigger the combustion reaction of the hydrocarbon-air mixture during the reactor start-up step, to quickly achieve the threshold temperature of the ATR catalyst.

In fact, only during the start-up step, the heat developed in the lower zone of the reactor by the combustion reactions is quickly transferred to the upper reforming zone by the gases flowing into the reactor, allowing the quick heating of the catalyst up to its threshold temperature and above.

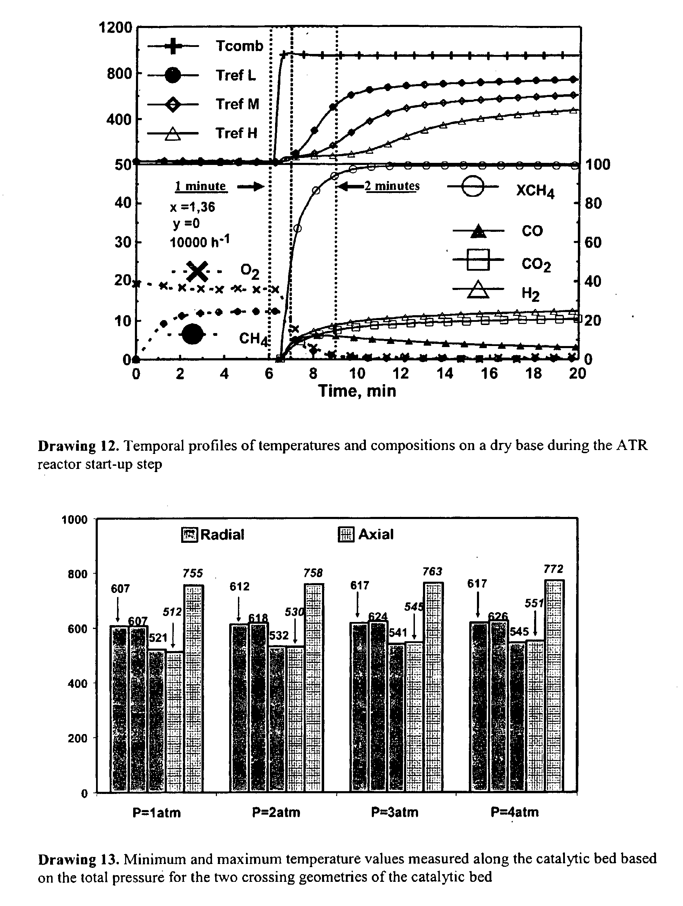

A typical start-up test for the ATR reactor is shown in drawing 12, in terms of temperatures measured along the reactor and concentration of output gases on a dry base.

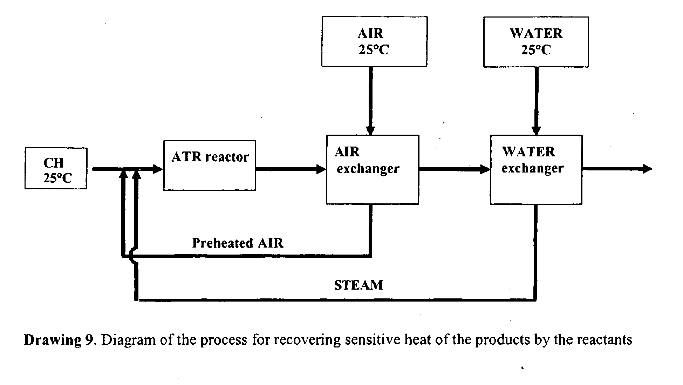

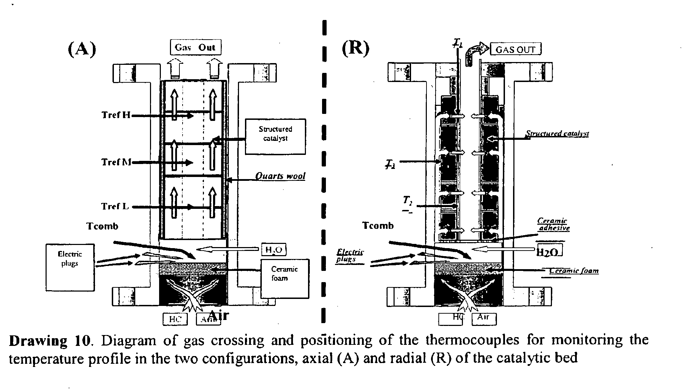

The catalytic bed (with a volume comprised within the range 10-500 cm³, more preferably within the range 20-200 cm³, and more preferably 30-100 cm³, is positioned in the reforming zone and is supported by a metal mesh consisting of a suitably interlaced Kantal wire. Water feeding takes place immediately at the base of the Kantal mesh so as to ensure the mixing of all reactants before the catalytic bed. The volume of the catalytic bed may be made with a cylindrical geometry for allowing the crossing of gases along the axis, or creating a hollow central zone, so as to allow the crossing by gases in radial direction. In the axial configuration (A), schematised in Drawing 10, the temperature inside the reactor is monitored by 4 thermocouples of the K type. The first one, called Tcomb, is positioned in the proximity of the upper surface of the SiC foam, whereas in order to determine the (axial) temperature profile in the reforming zone, three K type thermocouples are arranged in central position relative to the diameter, at 25%, 50% and 75% of the height of the catalytic bed, and are respectively defined TrefL, TrefM, TrefH. Other thermocouples are inserted in the specific positions, along the gas path for monitoring the temperature of water and preheated air, of the current coming out of the reactor before and after the thermal exchange and of the air-hydrocarbon mixture in the mixing chamber (see Drawing 9). In the radial configuration (R), the thermocouples for determining the temperature profile in the catalytic bed are arranged and named according to the diagram shown again in Drawing 10, whereas all the others are unchanged.

A differential pressure sensor is inserted between the reactor inlet and outlet for monitoring load losses through the catalytic bed. In this way it is also possible to have an indirect indication of any coke forming in the catalyst volume.

Moreover, the outside of the reactor is thermally insulated with a specific ceramic liner pad for limiting outwards load losses.

The ATR reactor is thermally integrated with two heat exchangers for carrying out the preheating of fed air and water, by sensitive heat of the current output from the reforming zone.

To better clarify the diagram shown in Drawing 9 relating to the reactant preheating, it is seen that the cold air enters at the top of the reactor, exchanges heat with the hot current in output from the reactor, and finally enters at the bottom into the reactor directly into the mixing chamber where it meets the hydrocarbon.

After having preheated the air, the current in output from the reactor crosses a second heat exchanger where it meets the liquid water that is heated, vaporised and then fed to the reactor immediately before the reforming zone, where it combines with the other two reactants.

The current to be sent to the analysis is collected with a sampling line where a constant rate is fixed through a specific mass rate meter-controller, delivered in advance to a cold trap with controlled temperature (0°C) for reducing condensable substances and then delivered to a specific online analysis system for analysing CO,CO₂,CH₄. O₂ and H₂.

From what is said it is clear that the autothermic reforming reactor consists of a complex of elements that in order to ensure the utmost overall conversion efficiency must absolutely integrate. In fact, besides the reactor structure, both the catalyst composition and composition, chemical-physical properties and porosimetric and textural structure of the mechanical support whereon the deposition of active species is carried out, are very important.

In fact, in a synergy with what is said so far, the use of a chemical formulation capable of activating a direct mechanism, and the concurrent presence of a structured support characterised by a high porosity, tortuosity and thermal conductivity can considerably help to reach the fixed object. In this invention, a specific formulation of the catalyst was prepared using a metal support with an open cell cellular structure, and a porosity comprised within the range 6-200 ppi, more preferably within the range 40-150 ppi and more preferably 50-100 ppi, with a vacuum degree comprised within the range 10-99%, more preferably within the range 50-99% and more preferably 80-95%. The chemical composition of the support involves the presence of Al-Fe-Cr, with a percentage of Al comprised within the range 0.5-50%, more preferably within the range 1-30% and more preferably 3-15%.

### Examples

The following examples do not fall within the scope of the claims.

### Example 1

### Autothermic Reforming of CH₄ at a high spatial velocity: influence of thermal conductivity of the catalyst mechanical support.

Two structured catalysts were compared in these experimental tests, both characterised by a beehive geometry and with an equal chemical formulation as regards active species and molar contents thereof, but with a different structured support. In particular, two beehive monolith samples were compared, in one case using a ceramic sample (cordierite) and in the other a metal sample (FeCrAlloy). Temperature profiles along the catalytic bed and concentrations of mainproducts at the outlet of the ATR reactor were determined for both catalysts. The results clearly highlighted that the use of a mechanical support with a high thermal conductivity, considerably improving heat transport, allows obtaining a temperature profile inside the ATR reactor that is significantly flattened compared to the profile obtained with the same catalyst on a low thermal conductivity support like cordierite. Two commercial structured catalysts of the "three way" beehive monolith type were used in these tests, based on Pt-Rh, with an atomic ratio between metals Pt/Rh=5/1, and a total nominal charge of metals comprised between 1428,57 g/m3 and 1785,71 g/m3 (40 and 50 g/ft³).

The experimental conditions used in the tests were as follows:
Molar feeding ratios of O₂/CH₄ and H₂O/CH₄ respectively equal to 0.56 and 0.49, whereas spatial velocity (GHSV) was varied within the range 45000-150000 h⁻¹. For both samples, the volume was about 70cm³.

The results of the experimental tests are shown in the following tables 1 and 2, where it is noted that significant advantages are obtained in the case of the metal support.

**Table 1. Comparison between temperature profiles along the catalytic bed obtained using beehive structured catalysts with ceramic and metal support at three different spatial velocity.**

| **Spatial velocity, h⁻¹** | **Ceramic support** | | | **Metal support** | | |
|---|---|---|---|---|---|---|
| | TrefL, °C | TrefM, °C | TrefH, °C | TrefL, °C | TrefM, °C | TrefH, °C |
| 45000 | 811 | 760 | 748 | 735 | 696 | 696 |
| 68000 | 857 | 800 | 782 | 759 | 715 | 705 |
| 90000 | 906 | 813 | 784 | 785 | 738 | 718 |

**Table 2. Methane conversion and concentration of products on a dry base at the outlet of the ATR reactor using beehive structured catalysts with ceramic and metal support for three different spatial velocity.**

| **Spatial velocity, h⁻¹** | **Ceramic support** | | | | **Metal support** | | | |
|---|---|---|---|---|---|---|---|---|
| | CO, %vol | CO₂, %vol | H₂, %vol | XCH₄, % | CO, %vol | CO₂, %vol | H₂, %vol | XCH₄, % |
| 45000 | 13.0 | 5.0 | 35.8 | 86.2 | 12.5 | 5.6 | 41.2 | 90.0 |
| 68000 | 13.9 | 4.6 | 35.5 | 87.6 | 13.2 | 5.4 | 42.2 | 91.8 |
| 90000 | 14.7 | 4.7 | 38.9 | 86.2 | 13.7 | 5.3 | 42.5 | 92.9 |

In fact, the results show that the use of a FeCrAlloy monolith simultaneously allows a lower mean temperature, a significant attenuation of the gradient and a higher methane conversion, with a higher production of H₂. Moreover, analysing the temporal diagrams (not shown in this example) of temperatures and concentrations on a dry base at the outlet of the reactor, a higher system stability and very quick response of the ATR reactor to the change of operating conditions are noted when the catalyst made on the metal support is used.

### Example 2: Influence of the support macroporous structure and tortuosity

This test studies the effects of using two different structured supports in making a same catalyst for the autothermic reforming reaction of methane with air and water.

In particular, the object is to prove that adopting a structured support characterised by a high tortuosity and porosity leads to a better heat transfer and allows, the chemical formulation of the catalyst being equal, obtaining a temperature profile along the catalytic bed characterised by a significantly reduced axial gradient.

The tests were conducted in the following operating condition:
Molar feeding ratio (x) O₂/C =0.56
Molar feeding ratio (y) H₂O/C =0.49
Spatial velocity (GHSV)= 90000h⁻¹
Catalyst volume = 70cm³

The results are shown comparatively in table 3 in terms of temperature measured in the three positions along the reactor axis for the two different catalytic systems and in terms of methane conversion and product concentration.

**Table 3. Temperature profiles along the catalytic ATR reactor axis, conversion of CH₄ and concentration of products on a dry base at the outlet of the ATR reactor for two different structured supports - Influence of the support tortuosity and porosity.**

| **Structured support** | TrefL, °C | TrefM, °C | TrefH, °C | CO, % vol | CO₂, %vol | H₂, %vol | XCH₄, % |
|---|---|---|---|---|---|---|---|
| Beehive monolith | 991 | 786 | 733 | 15.5 | 5.4 | 39.6 | 92.4 |
| SiC foam 6 ppi | 1009 | 917 | 858 | 14.3 | 5.1 | 40.2 | 89.3 |

The comparison between experimental results clearly shows that a typical profile is obtained for both systems characterised by a significantly higher temperature in the initial part of the bed which decreases advancing along the reactor axis. In fact, if temperature values are considered it is noted that in the case of ceramic monolith with beehive structure, wherein all straight channels are provided, a maximum temperature variation of about 250 °C takes place, whereas in the case of the catalyst sample made on the silicon carbide foam, the ΔT maximum value is significantly reduced and is equal to about 150°C. From the comparison of methane conversion and product concentration data, it is seen that despite the significant differences observed in temperature profiles, from a chemical point of view the performance of the two supports is very similar both in terms of hydrogen concentration produced and of methane conversion.

Therefore, it can certainly be said that in an autothermic reforming reaction, using structured high tortuosity supports with porosity higher than 70% it is possible to obtain a significant flattening of the temperature profile along the catalytic bed, respecting the totally adiabatic operation of the reactor itself.

### Example 3: Influence of flow geometry in the catalytic Autothermic Reforming of CH₄

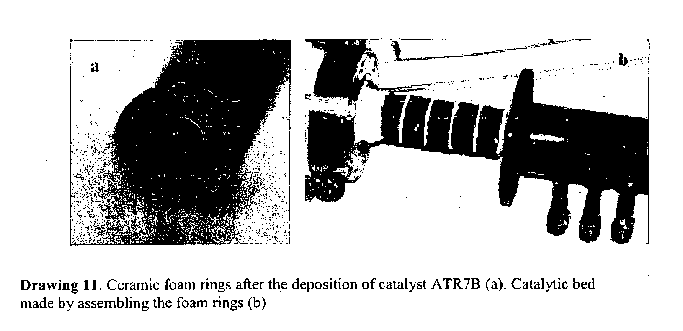

These tests assessed the influence of the gas flow geometry on the temperature profile in the catalytic bed. The tests were conducted realising two different catalytic beds prepared using the same catalyst formulation and the same support. The two beds were assembled outside the reactor so as to insert them into the reactor in the same volume, but allowing the two different bed crossing geometries, and then check the influence thereof on the overall reactor performance in terms of temperature profile, CH₄ conversion and H₂ production. The reaction was conducted in both cases in the same operating conditions of spatial velocity and feeding ratios O₂/C and H₂O/C. The catalyst formulation used in these tests was specific for the ATR reaction (Engelhard, ATR7B) supported on circular ceramic open cell rings (VESUVIUS) consisting of stabilised zirconia (see Drawing 11a).

For both configurations, 5 rings of catalysed foam were used which were assembled as shown in Drawing 11b. The tests were conducted at different values of the feeding ratios O₂/C and H₂O/C and with different values of GHSV and at different values of total pressure in the system.

Diagrams 12 and 13 show a comparison of the results of tests carried out in the two configurations of the catalytic bed. Reference should be made to Drawing 10 for the thermocouple nomenclature. Maximum and minimum temperatures for both systems are shown to allow a quick comparison.

The operating conditions tested were as follows:
O₂/CH₄=0.6, H₂O/CH₄=0.5, GHSV=25,000 h⁻¹, P=1÷4 atm.

Diagram of drawing 13 clearly shows that in the case of axial flow, much stronger temperature gradients are obtained, with significantly higher temperature values in the initial zone of the bed. In particular, it is noted that in the axial case the temperature variation between the initial zone of the catalytic bed and the final zone is always higher than 200°C, whereas in the radial case the maximum difference of temperature measured is always below 100°C.

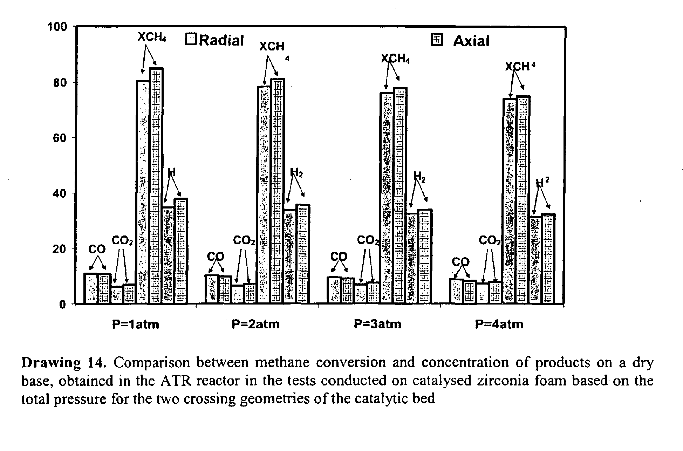

The comparison between the performance of the two configurations in terms of methane conversion and concentration of H₂ produced is shown in diagram of drawing 14.

In diagram of drawing 14 it is clear that compared to the large reduction of the temperature gradient ensured by the radial configuration, the difference of CH₄ conversion and H₂ concentration is certainly not very significant. This result clearly shows that the presence of very high temperatures in the initial zone of the catalytic bed is little significant, and their main effect is just a quicker deactivation of the catalyst.

### Example 4: Influence of the catalyst formulation on the temperature profile

From what seen so far it is clear that usually, a temperature profile develops in an ATR catalytic reactor which is characterised by a first zone at the catalytic bed inlet, wherein a significant peak of temperature occurs, and a subsequent portion, more or less extended, wherein there is a monotonous decreasing pattern. According to the complexity of the autothermic reforming reaction, this type of temperature pattern depends on numerous parameters and among the others, on the intrinsic mechanism of the reaction itself. In fact, many authors explain the typical profile with a microkinetics mechanism wherein the exothermic and quicker total and partial oxidation reactions occur first, then the endothermic reforming reactions occur, which are slower. Such mechanism is generally called "indirect" for its sequentiality. According to such hypothesis, the provision of a specific formulation of a catalyst capable of "directly" transforming the hydrocarbon into the desired products, could ensure a considerably "flatter" temperature profile, thus ensuring optimum use of the catalyst volume and ensuring a longer duration of the catalyst itself. This example shows the results of some tests of catalytic activity conducted using structured catalysts prepared on metal foams (FeCrAlloy). The peculiar formulation of such catalysts, based on perovskite materials in combination with noble metals, is very promising for the present application since for such formulations there are experimental proofs relating to the action of a "direct" type conversion mechanism.

The operating conditions used in conducting these tests are as follows:
- 0.25 < O₂/C < 0.56
- H₂O/C = 0.49
- 20,000 h⁻¹ < GHSV < 90,000 h⁻¹

The results of such tests are shown in tables 4 and 5, which respectively show the temperature profile patterns and the product concentrations on a dry base upon the variation of spatial velocity (at fixed feeding ratios, with x equal to 0.56 and y equal to 0.49) and of the molar feeding ratio O₂/C (with fixed spatial velocity and equal to 45000 h⁻¹).

**Table 4. Temperature profile, methane conversion and concentration of products on a dry base, obtained in the ATR reactor in the tests conducted with Rh-perovskite catalyst based on spatial velocity.**

| **Spatial velocity, h⁻¹** | TrefL, °C | TrefM, °C | TrefH, °C | CO, %vol | CO₂, %vol | H₂, %vol | XCH₄, % |
|---|---|---|---|---|---|---|---|
| 20000 | 735 | 711 | 682 | 12,6 | 5,3 | 38,3 | 85,2 |
| 45000 | 791 | 769 | 745 | 13,2 | 4,6 | 37,1 | 84,2 |
| 68000 | 857 | 827 | 804 | 14,1 | 4,2 | 36,2 | 83,1 |
| 90000 | 873 | 835 | 811 | 14,5 | 4,1 | 36,2 | 83,2 |

**Table 5. Temperature profile, methane conversion and concentration of products on a dry base, obtained in the ATR reactor in the tests conducted with Rh-perovskite catalyst based O₂/C feeding ratio.**

| **O₂/ C** | TrefL, °C | TrefM, °C | TrefH, °C | CO, %vol | CO₂, %vol | H₂, %vol | XCHL₄, % |
|---|---|---|---|---|---|---|---|
| 0,5 6 | 791 | 769 | 745 | 13,2 | 4,6 | 37,1 | 84,2 |
| 0,5 0 | 750 | 729 | 707 | 12,7 | 4,9 | 37,5 | 77,4 |
| 0,4 5 | 722 | 704 | 683 | 12,0 | 5,1 | 37,0 | 70,2 |
| 0,4 0 | 698 | 683 | 661 | 11,0 | 5,4 | 36,0 | 62,4 |
| 0,3 5 | 677 | 664 | 643 | 9,8 | 5,8 | 34,5 | 54,4 |
| 0,3 0 | 659 | 647 | 626 | 8,4 | 6,2 | 32,2 | 45,5 |
| 0,2 5 | 645 | 628 | 608 | 6,7 | 6,6 | 29,0 | 36,5 |

Table 4 shows that even in axial configuration, the Rh-perovkite catalyst obtains a temperature profile inside the ATR reactor that is characterised by a quite flattened axial gradient. In fact, the maximum difference of temperature measured in the various operating conditions is about 50°C, thus considerably lower than 200-250°C that is typically observed in these reactors operating with "typical" catalytic formulations. Moreover, it should be noted that contrary to what usually occurs with different catalytic systems, in all tests conducted no considerable variations of the temperature gradient were noted upon variation of the spatial velocity. This proves a great chemical and thermal stability of the catalyst.

Table 5 shows the results relating to the influence of the molar ratio O₂/C.

Also in these tests, the results show a particularly flat temperature profile for these operating conditions, and in particular a clean independence of such profile from the feeding ratio is noted. In fact, as the O₂/C ratio decreases, a decrease of the mean temperature of the reactor is essentially noted, which is matched by a lower methane conversion and lower concentration of H₂, all with an extreme stability up to very low values, which correspond to so small amounts of oxygen fed that normally lead to the reactor instability, with consequent shutdown of the same.

Although these results seem to be according to an operating mechanism of the catalyst that looks quite different from those typically used in ATR reactors, at present they do not allow asserting that the proposed catalyst operates through a fully "direct" mechanism. In any case, it is proven that the formulation proposed herein wherein the Rh-perovskite catalyst is prepared on a structured support with a high thermal conductivity in the form of open cell foam, is certainly interesting and innovative since it allows a significantly more even temperature profile.

To prepare the structured catalyst based on Rh-perovskite on Fecralloy foam it is necessary to first prepare the perovskite compound containing Rh and then carry out the "coating" step on the structured support.

The perovskite sample containing rhodium was prepared according to what described in patent "Soluzioni solide a struttura perovskitica comprendente metalli nobili, utili come catalizzatori" filed on June 17th, 2001 [10].

The synthesised perovskite has the formula BaZr_{1-0,1351}Rh_{0,1351}O₃. The value of 0.1351 corresponds to a perovskite at 5% by weight of Rh.

The subsequent "coating" step of the fecralloy foam with perovskite BaZr₍₁₋ₓ₎RhₓO₃ prepared before follows the procedure below.

*Preparation of structured catalysts (such as foams or monoliths shaped as beehive) coated with powders with perovskite structure of general formula Ba_{z}Zr₍₁₋ₓ₎MeₓO₃ where Me is one or more elements of the eighth group or or hafnium of the periodic table of the elements.*

The powder is inserted into a 250 mL jar of zirconium oxide, wherein 50 10-mm diameter marbles, of zirconium oxide as well, and 2-methyl-1-butanol as dispersant, have been added. In general, a charge is used which is equal to 80% of the maximum one, with 30 g powder and 40 ml dispersant. Grinding is carried out with a planetary mill (Fritsch Pulverisette 6, speed 600) and it lasts 1 hour total.

11.58 g fecralloy foam (consisting of a 3.98 cm diameter and 1.95 cm high cylinder with 0.484 g/cc density) with "relative density" 6.70% and vacuum degree ε = 93.30% are calcined with a thermal rise of 60°C/hour up to 950°C, kept at 950°C for 10 hours and cooled to room temperature with a thermal drop of 60°C/hour. 11.65 g of fecralloy foam are obtained.

The suspension (11% perovskite in 2-methyl-1-butanol) used in the present example, consisting of BaZr₍₁₋ₓ₎RhₓO₃ containing 5% by weight of Rh, was prepared as already described (preparation through citrates, drying, calcining at 800°C of the solid solution of BaZr₍₁₋ₓ₎RhₓO₃ and subsequent wet grinding. The powder suspended in the dispersant was formed by a 90% percentage of < 3 micron and 65% < 1 micron particles (grain meter Cilas model 1180). The fecralloy cylinder is immersed and turned over into the suspension of perovskite powder BaZr₍₁₋ₓ₎RhₓO₃ in 2-methylbutanol; the cylinder is removed and the excess suspension is made to drip, then it is dried with an air flow at the temperature of 40°C-50°C up to a constant weight and the cylinder is immersed into the suspension and dried again up to the deposition by coating of 2.73 g BaZr₍₁₋ₓ₎RhₓO₃. It is placed in a stove at 110°C overnight. It is calcined with a thermal rise of 120°C/hour up to 900°C and maintained 10 hours, then it is cooled to room T with a drop of 120°C/hour.

Fecralloy + perovskite weight = 14.3300 g, perovskite weight = 2.61 g

Fecralloy has the perovskite well adhering to fecralloy.

The result therefore is:
Rhodium perovskite 10.77g over /100cc fecralloy
Rhodium 0.5385 g Rhodium over /100cc fecralloy
The estimated thickness of the perovskite phase on the foam is 45 µm.

### Deposition by coating of perovskite BaZr₍₁₋ₓ₎RhₓO₃ on silicon carbide foam

The sample was wet ground according to the description above.

A cylinder weighing 13.05 g, 3.4cm diameter and 4.6cm height, of silicon carbide foam having 393.7 pores per linear meter (10 pores per linear inch) and "relative density 9.899% and vacuum degree ε = 90.10%) is immersed in a suspension (11% perovskite in 2-methyl-1-butanol) of very fine powder of BaZr₍₁₋ₓ₎RhₓO₃ containing 5% by weight of Rh. The powder dispersed in 2-methyl-1-butanol consisted of a 90% percentage of < 3 micron and 60% < 1 micron particles (grain meter Cilas model 1180). The silicon carbide cylinder is removed and the excess suspension is made to drip, then it is dried with an air flow at the temperature of 30°C-60°C up to a constant weight and the cylinder is immersed into the suspension and dried again up to the deposition by coating of 1.4254 g BaZr₍₁₋ₓ₎RhₓO₃. It is placed in a stove at 110°C overnight. A myriad of small lights are seen rotating the cylinder and looking at it against the light, which denote many small open passages.

Weight of the cylinder impregnated with rhodium/perovskite = 14.4755. It is calcined with a thermal rise of 120°C/hour up to 900°C and maintained 10 hours, then it is cooled to room T with a drop of 120°C/hour.
SiC + perovskite weight = 14.1060 g, perovskite weight = 1.0559 g
Perovskite remains well adhering to the Silicon Carbide foam.
Rhodium perovskite 2.53 g/100cc SiC
Rhodium 0.127 g Rhodium over/100cc SiC
The coating is 20 µm thick.

### Materials and chemical reagents used

Methane with a purity degree of 99.5% was supplied by SOL. Air with a purity degree of 99,999% was supplied by SOL. Bidistilled H₂O was supplied by Carlo Erba.

Ceramic foam SiC/Al₂O₃ was supplied by VESUVIUS Hi-Tech Ceramics. Ceramic foam 97%ZrO₂+3%MgO was supplied by VESUVIUS Hi-Tech Ceramics.

Alcohol solution of zirconium propoxide, Zr(C₃H₇O)₄, in I -propyl alcohol (20% by weight of Zr), with a density of 1.044 g/cm³was supplied by Aldrich.

Monohydrate citric acid, C₆H₈O₇*H₂O was supplied by Carlo Erba.

Aqueous solution of ammonium hydroxide, NH₄OH, (25% by weight), with density of 0.91 g/cm³ was supplied by Merk.

Barium peroxide, BaO₂ was supplied by Acros.

Rhodium acetate, Rh(CO₂CH₃)x, (39.25% Rh by weight) was supplied by Chempur.

### Advantages of the invention

- Steady adiabatic/autothermic reactor with flat temperature profile and totally self-sufficient
- Optimisation of the energy balance through thermal integration obtained by recovering the product sensitive heat by the reactants
- Large catalytic surface per volume unit
- High compactness and hydrogen productivity
- Optimum specific H₂ productivity for making decentralised units for distributed energy production
- Short start-up time and transients in load variations
- High operating stability of the reactor and long duration of the catalyst.

### BIBLIOGRAPHIC REFERENCES

[1] R. Farrauto, S. Hwang, L. Shore,W. Ruettinger, J. Lampert, T. Giroux, Y. Liu, O. Ilinich, Ann. Rev. Mater. Res. 33 (2003) 1.
[2] T. Giroux, S. Hwang, Y. Liu, W. Ruettinger, L. Shore, Applied Catalysis B: Environmental 55 (2005) 185-200
[3] Haldor Topsøe A/S, Hydrocarbon Process. 67 (1988) 77
[4] K. Aasberg-Petersen, J.H. Bak Hansen, T.S. Christensen, I. Dybkjaer, P. Seier Christensen, C. Stub Nielsen, S.E.L. Winter Madsen, J.R. Rostrup-Nielsen, Appl. Catal. A 221 (2001) 379
[5]A. Heinzel, B. Vogel, P. Hübner, J. Power Sources 105 (2002) 202
[6] S.H.D. Lee, D.V. Applegate, S. Ahmed, S.G. Calderone, T.L. Harvey, Int. J. Hydrogen 30 (2005) 829
[7] S. Ahmed, M. Krumpelt, Int. J. Hydrogen Energy 26 (2001) 291
[8] D.J. Liu, T.D. Kaun, H.-K. Liao, S. Ahmed, Int. J. Hydrogen Energy 29 (2004) 1035
[9] H. Jung, W.L. Yoon, H. Lee, J.S. Park, J.S. Shin, H. La, J.D. Lee, J. Power Sources 124 (2003) 76
[10] P.L. Villa "Soluzioni solide a struttura perovskitica comprendenti metalli nobili, utili come catalizzatori" Patent application no. MI2001A 001519 of 17-07-2001, granted on 21/12/2004 with no. 1325822, extended abroad as PTC: P.L. Villa "Solid solutions, applicable as catalysts, with a perovskite structure comprising noble metals" PCT/EP02/07906 the 17 07 02 U.S.A patent no. 7,166,267 granted on 23 January 2007 (the patent will last from 16 July 2002 to 3 March 2023). European patent application 02764701.5 filed on 16/07/2004;

## Claims

1. An autothermal catalytic reactor with flat temperature profile for hydrogen production from gaseous or liquid hydrocarbons, reacting with air and water, comprising:
- a catalytic bed realized with a radial flow geometry;
- a structured support of Iron/Chromium alloy or Silicon Carbide foam, having an open cell cellular structure and a porosity comprised within the range 6-200 ppi and a vacuum degree comprised within the range 10-99%, so to obtain a high tortuosity, **characterised by** a high thermal conductivity, wherein said support is coated with a chemical structure of the perovskite type with formula BaZr₁₋ₓ(noble Metal)ₓO₃ as catalyst, said chemical structure being capable of activating a "direct type" reaction mechanism.

2. The catalytic reactor according to claim 1 wherein the noble metal is selected from the noble metals of the eighth group of the periodic system of element.

3. The catalytic reactor for hydrogen production according to claim 1, wherein the noble metal is Rh at 5% by weight.

4. The catalytic reactor according to any one of the claims 1 to 3 further comprising a disc of ceramic material that is arranged between a lower section wherein hydrocarbon and air meet up and an upper zone where the catalyst is positioned,
said disc of ceramic material containing silicon carbide (SiC) with an open cell cellular structure, and a porosity comprised within the range 6-200 ppi and a vacuum degree comprised within the range 10-99%.

## Patentansprüche

1. Autothermer katalytischer Reaktor mit einem flachen Temperaturprofil zur Herstellung von Wasserstoff aus gasförmigen oder flüssigen Kohlenwasserstoffen, die mit Luft und Wasser reagieren, wobei der Reaktor Folgendes aufweist:
- ein katalytisches Bett, das mit einer radialen Durchflussgeometrie umgesetzt ist;
- einen strukturierten Träger aus einer Eisen-/Chromlegierung oder einem Siliziumkarbidschaum, der eine offenzellige Zellstruktur und eine Porosität aufweist, die innerhalb des Bereichs von 6-200 ppi liegt, und einen Vakuumgrad, der innerhalb des Bereichs von 10-99% liegt, so dass eine hohe Tortuosität erhalten wird, **gekennzeichnet durch** eine hohe Wärmeleitfähigkeit, **dadurch** gekennzeichnet, dass der Träger mit einer chemischen Struktur nach Perowskit-Art mit der Formel BaZr₁₋ₓ(Edelmetall)ₓO₃ als Katalysator beschichtet ist, wobei die chemische Struktur dazu fähig ist, einen "direkten" Reaktionsmechanismus zu aktivieren.

2. Katalytischer Reaktor nach Anspruch 1, **dadurch gekennzeichnet, dass** das Edelmetall aus den Edelmetallen der achten Gruppe des periodischen Systems der Elemente ausgewählt ist.

3. Katalytischer Reaktor zur Herstellung von Wasserstoff nach Anspruch 1, **dadurch gekennzeichnet, dass** das Edelmetall zu 5 Gew.-% Rh ist.

4. Katalytischer Reaktor nach einem der Ansprüche 1 bis 3, der des Weiteren eine Scheibe aus keramischem Material aufweist, die zwischen einem unteren Abschnitt, in welchem Kohlenwasserstoff und Luft aufeinandertreffen, und einem oberen Bereich, in welchem der Katalysator positioniert ist, angeordnet ist,
wobei die Scheibe aus keramischem Material Siliziumkarbid (SiC) mit einer offenzelligen Zellstruktur, und eine Porosität, die innerhalb des Bereichs von 6-200 ppi liegt, und einen Vakuumgrad, der innerhalb des Bereichs von 10-99% liegt, enthält.

## Revendications

1. Réacteur catalytique autothermique ayant un profil de température plat pour la production d'hydrogène à partir d'hydrocarbures gazeux ou liquides, qui réagissent avec l'air et l'eau, comprenant :
- un lit catalytique réalisé avec une géométrie d'écoulement radiale ;
- un support structuré d'un alliage de fer/chrome ou d'une mousse de carbure de silicium, ayant une structure cellulaire à cellule ouverte et une porosité comprise dans la plage allant de 6 à 200 ppi et un degré de vide compris dans la plage allant de 10 à 99 %, de sorte à obtenir une tortuosité élevée, **caractérisé par** une conductivité thermique élevée, dans lequel ledit support est revêtu avec une structure chimique de type pérovskite de formule BaZr₁₋ₓ(métal noble)ₓO₃ en tant que catalyseur, ladite structure chimique étant capable d'activer un mode de réaction de « type direct ».

2. Réacteur catalytique selon la revendication 1, dans lequel le métal noble est choisi parmi les métaux nobles du groupe huit du tableau périodique des éléments.

3. Réacteur catalytique pour la production d'hydrogène selon la revendication 1, dans lequel le métal noble est Rh à 5 % en poids.

4. Réacteur catalytique selon l'une quelconque des revendications 1 à 3, comprenant en outre un disque de matière céramique qui est placé entre une section inférieure dans laquelle l'hydrocarbure et l'air se rencontrent et une zone supérieure dans laquelle le catalyseur est placé,
ledit disque de matière céramique contenant du carbure de silicium (SiC) ayant une structure cellulaire à cellule ouverte et une porosité comprise dans la plage allant de 6 à 200 ppi et un degré de vide compris dans la plage allant de 10 à 99 %.
